(19) Europäisches Patentamt
European Patent Office
Office européen des brevets

(11) Veröffentlichungsnummer : **0 601 970 A1**

# (12) EUROPÄISCHE PATENTANMELDUNG

(21) Anmeldenummer : **93810812.3**

(22) Anmeldetag : **24.11.93**

(51) Int. Cl.[5] : **C09B 62/467,** C09B 67/22

(30) Priorität : **03.12.92 CH 3718/92**

(43) Veröffentlichungstag der Anmeldung :
**15.06.94 Patentblatt 94/24**

(84) Benannte Vertragsstaaten :
**BE CH DE ES FR GB IT LI**

(71) Anmelder : **CIBA-GEIGY AG**
**Klybeckstrasse 141**
**CH-4002 Basel (CH)**

(72) Erfinder : **Adam, Jean-Marie, Dr.**
**Rue de Village Neuf 60 D**
**F-68300 Rosenau (FR)**

## (54) Anthrachinonfarbstoffe, Verfahren zu deren Herstellung und deren Verwendung.

(57) Anthrachinonfarbstoffe der Formel

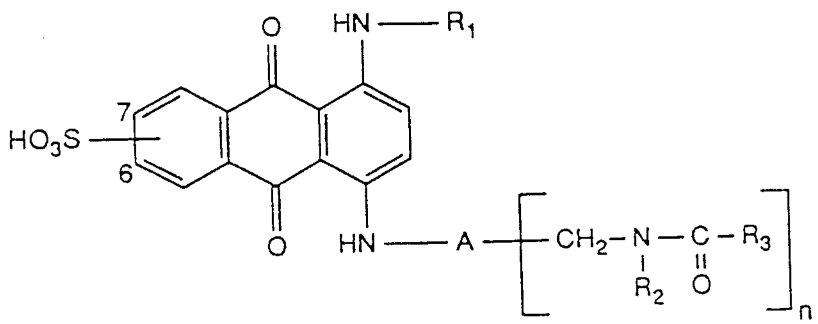

(1),

worin
$R_1$ gegebenenfalls substituiertes $C_5$-$C_8$-Cycloalkyl oder ein Rest der Formel

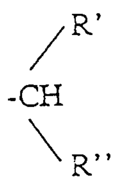

ist,
wobei R' und R" unabhängig voneinander einen $C_1$-$C_4$-Alkylrest bedeuten,
$R_2$ Wasserstoff oder $C_1$-$C_4$-Alkyl,
$R_3$ gegebenenfalls durch Halogen substituiertes $C_1$-$C_4$-Alkyl oder $C_2$-$C_4$-Alkenyl, oder gegebenenfalls substituiertes Phenyl ist, oder worin der Rest der Formel

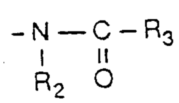

einen gegebenenfalls im Phenylring substituierten Rest der Formel

EP 0 601 970 A1

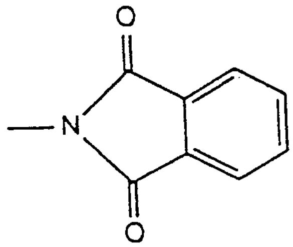

darstellt,
A ein aromatisches Brückenglied und
n die Zahl 1,2 oder 3 ist,
wobei die Sulfogruppe im Farbstoff der Formel (1) in der bezeichneten 6- oder 7-Position gebunden ist.

Die vorliegende Erfindung betrifft neue Anthrachinonfarbstoffe, Verfahren zu deren Herstellung und Verwendung dieser Farbstoffe zum Färben und Bedrucken von Fasermaterialien, insbesondere textilen Fasermaterialien.

Gegenstand der vorliegenden Erfindung sind Anthrachinonfarbstoffe der Formel

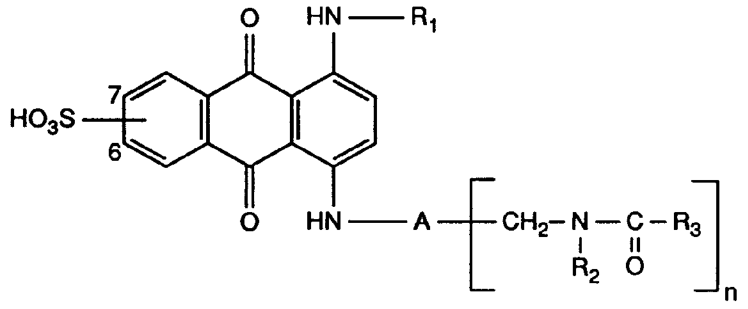

(1),

worin

$R_1$ gegebenenfalls substituiertes $C_5$-$C_8$-Cycloalkyl oder ein Rest der Formel

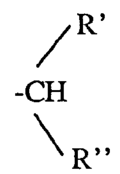

ist, wobei R' und R" unabhängig voneinander einen $C_1$-$C_4$-Alkylrest bedeuten,

$R_2$ Wasserstoff oder $C_1$-$C_4$-Alkyl,

$R_3$ gegebenenfalls durch Halogen substituiertes $C_1$-$C_4$-Alkyl oder $C_2$-$C_4$-Alkenyl, oder gegebenenfalls substituiertes Phenyl ist, oder worin der Rest der Formel

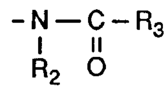

einen gegebenenfalls im Phenylring substituierten Rest der Formel

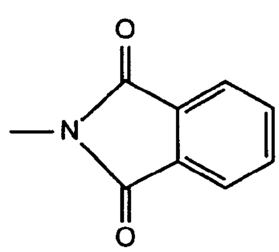

darstellt,

A ein aromatisches Brückenglied und

n die Zahl 1, 2 oder 3 ist,

wobei die Sulfogruppe im Farbstoff der Formel (1) in der bezeichneten 6- oder 7-Position gebunden ist.

Als $C_5$-$C_8$-Cycloalkyl kommen für $R_1$ vorzugsweise Cyclopentyl, Cyclohexyl und Cycloheptyl, insbesondere Cyclohexyl, in Betracht. Die genannten Cycloalkylreste können unsubstituiert oder durch $C_1$-$C_4$-Alkyl, wie Methyl, Aethyl, Propyl, Isopropyl, Butyl, Isobutyl, sek.-Butyl oder tert.-Butyl, insbesondere Methyl oder Aethyl, substituiert sein. Bevorzugt ist $R_1$ als $C_5$-$C_8$-Cycloalkyl gegebenenfalls durch $C_1$-$C_4$-Alkyl substituiertes Cyclohexyl, insbesondere unsubstituiertes Cyclohexyl.

Als $C_1$-$C_4$-Alkyl kommen für $R_2$, R' und R" unabhängig voneinander Methyl, Aethyl, Propyl, Isopropyl, Butyl, Isobutyl, sek.-Butyl oder tert.-Butyl in Betracht.

Als gegebenenfalls durch Halogen substituiertes $C_1$-$C_4$-Alkyl oder $C_2$-$C_4$-Alkenyl kommen für $R_3$ insbesondere Methyl, Aethyl oder Vinyl in Betracht. Die genannten Reste können unsubstituiert oder z.B. durch Chlor oder Brom substituiert sein. Als Beispiele seien $-CH_2Cl$, $-CH=CH_2$, $-CHBr-CH_2Br$ und

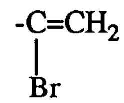

genannt.

Der Rest $R_3$ als Phenyl kann unsubstituiert oder substituiert sein. Als Beispiele für mögliche Substituenten seien $C_1$-$C_4$-Alkyl, wie z.B. Methyl oder Aethyl, $C_1$-$C_4$-Alkoxy, wie z.B. Methoxy oder Aethoxy, $C_2$-$C_4$-Alkanoylamino, wie z.B. Acetylamino oder Propionylamino, oder Halogen, wie z.B. Chlor oder Brom, genannt.

Stellt der Rest der Formel

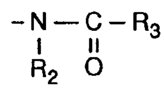

einen Rest der Formel

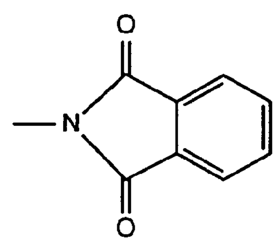

dar, so kann dieser Rest im Phenylring unsubstituiert sein oder wie oben für $R_3$ in der Bedeutung als Phenyl substituiert sein.

Das aromatische Brückenglied A ist vorzugsweise Phenylen oder Phenylenoxyphenylen, wobei diese Reste in den Phenylringen wie oben für $R_3$ in der Bedeutung als Phenyl substituiert sein können. Vorzugsweise sind die für A genannten Reste unsubstituiert oder durch $C_1$-$C_4$-Alkyl substituiert.

Bevorzugt sind Anthrachinonfarbstoffe, worin $R_1$ gegebenenfalls durch $C_1$-$C_4$-Alkyl substituiertes Cyclohexyl oder ein Rest der Formel

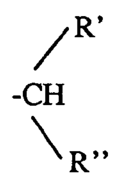

ist, wobei R' und R" unabhängig voneinander einen $C_1$-$C_4$-Alkylrest bedeuten. Besonders bevorzugt ist $R_1$ gegebenenfalls durch $C_1$-$C_4$-Alkyl substituiertes Cyclohexyl, Isopropyl, Isobutyl oder sek.-Butyl, insbesondere Isobutyl oder Cyclohexyl.

Weiterhin bevorzugt sind Anthrachinonfarbstoffe, worin $R_2$ Wasserstoff, Methyl oder Aethyl, insbesondere Wasserstoff, ist.

Bevorzugt sind ferner Anthrachinonfarbstoffe, worin $R_3$ gegebenenfalls durch $C_1$-$C_4$-Alkyl, $C_1$-$C_4$-Alkoxy, $C_2$-$C_4$-Alkanoylamino oder Halogen substituiertes Phenyl oder gegebenenfalls durch Chlor oder Brom substituiertes Methyl, Aethyl oder Vinyl ist. Besonders bevorzugt ist $R_3$ Phenyl oder ein Rest der Formel $-CH_2Cl$, $-CH=CH_2$, $-CHBr-CH_2Br$ oder

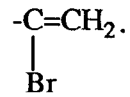

Für n ist die Zahl 1 oder 2, insbesondere die Zahl 1, bevorzugt.

Besonders bevorzugt sind Anthrachinonfarbstoffe, worin $R_1$ gegebenenfalls durch $C_1$-$C_4$-Alkyl substituiertes Cyclohexyl oder ein Rest der Formel

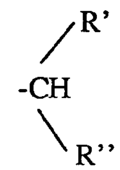

ist, wobei R' und R" unabhängig voneinander einen $C_1$-$C_4$-Alkylrest bedeuten, $R_2$ Wasserstoff, Methyl oder Aethyl, R3 gegebenenfalls durch $C_1$-$C_4$-Alkyl, $C_1$-$C_4$-Alkoxy, $C_2$-$C_4$-Alkanoylamino oder Halogen substituiertes Phenyl oder gegebenenfalls durch Chlor oder Brom substituiertes Methyl, Aethyl oder Vinyl, A gegebenenfalls durch $C_1$-$C_4$-Alkyl, $C_1$-$C_4$-Alkoxy, $C_2$-$C_4$-Allcanoylamino oder Halogen substituiertes Phenylen oder Phenylenoxyphenylen und n die Zahl 1 oder 2 ist.

Ganz besonders bevorzugt sind Anthrachinonfarbstoffe, worin $R_1$ Isopropyl oder Cyclohexyl, $R_2$ Wasserstoff, $R_3$ Phenyl oder ein Rest der Formel $-CH_2Cl$, $-CH=CH_2$, $-CHBr-CH_2Br$ oder

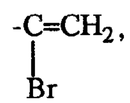

A gegebenenfalls durch $C_1$-$C_4$-Alkyl substituiertes Phenylen oder Phenylenoxyphenylen und n die Zahl 1 oder 2 ist.

Einen weiteren Gegenstand der vorliegenden Erfindung stellen Mischungen von Anthrachinonfarbstoffen dar, welche dadurch gekennzeichnet sind, dass sie einen Farbstoff der Formel

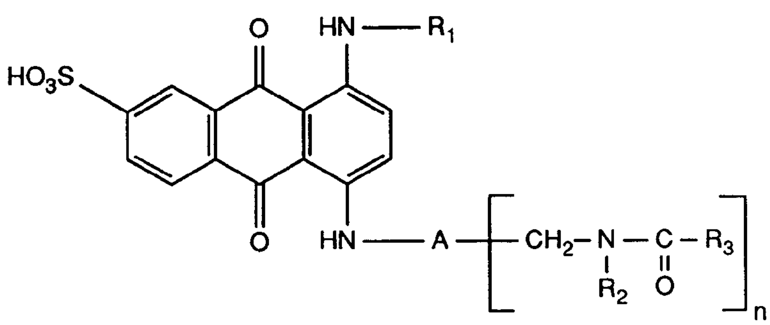

(1a)

zusammen mit einem Farbstoff der Formel

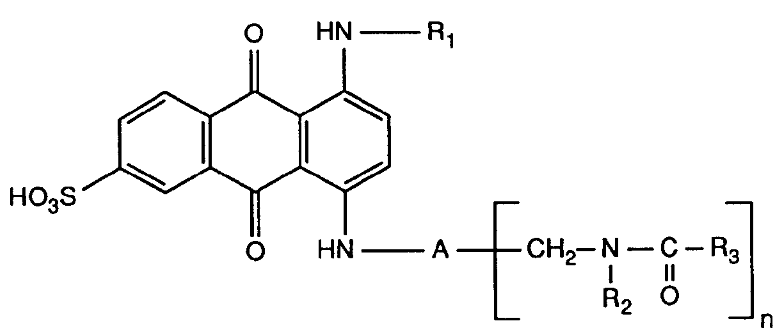

(1b)

enthalten, wobei für A, $R_1$, $R_2$, $R_3$ und n die oben angegebenen Bedeutungen und Bevorzugungen gelten.

Hierbei handelt es sich um Isomerenmischungen, worin sich die einzelnen Isomeren nur hinsichtlich der Stellung der Sulfogruppe unterscheiden.

Einen weiteren Gegenstand der vorliegenden Erfindung stellt ein Verfahren zur Herstellung der erfindungsgemässen Anthrachinonfarbstoffe dar, welches dadurch gekennzeichnet ist, dass man eine Verbindung der Formel

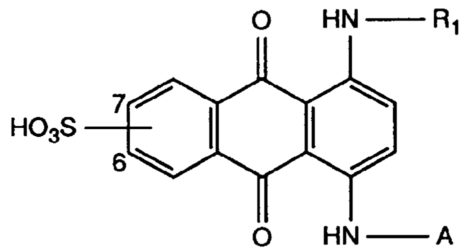

(2),

worin $R_1$ und A die unter Formel (1) angegebenen Bedeutungen haben, mit einer Verbindung der Formel

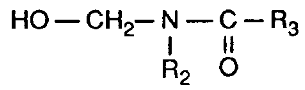

(3),

worin $R_2$ und $R_3$ die unter Formel (1) angegebenen Bedeutungen haben, umsetzt.

Die Umsetzung erfolgt vorzugsweise in Schwefelsäure, insbesondere in nahezu 100%-iger Schwefelsäure, bei einer Temperatur von z.B. 0 bis 40°C.

In dem erfindungsgemässen Verfahren zur Herstellung von Anthrachinonfarbstoffen der Formel (1) gelten für die Reste A und $R_1$ der Verbindung der Formel (2) und für die Reste $R_2$ und $R_3$ der Verbindung der Formel (3) die oben angegebenen Bedeutungen und Bevorzugungen.

Die Verbindungen der Formeln (2) und (3) sind bekannt oder können in Analogie zu bekannten Verbindungen hergestellt werden. So können Verbindungen der Formel (2) beispielsweise gemäss dem in der GB-A-1,438,354 angegebenen Verfahren erhalten werden.

Die Herstellung der Vorprodukte der Formel (2) wird ohne Verwendung von Quecksilber ausgeführt.

Die Vorprodukte der Formel (2) werden häufig als Isomerengemische eingesetzt, worin sich die einzelnen Isomeren lediglich durch die Stellung der Sulfogruppe unterscheiden, so dass in diesen Fällen auch die erhaltenen Farbstoffe als Isomerengemische vorliegen.

Die erfindungsgemässen Anthrachinonfarbstoffe der Formel (1) liegen entweder in der Form ihrer freien Säure oder vorzugsweise als deren Salze vor. Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Mono-, Di- oder Triäthanolamins genannt.

Die erfindungsgemässen Anthrachinonfarbstoffe der Formel (1) können zum Färben oder Bedrucken gemäss den üblichen Färbe- bzw. Druckverfahren verwendet werden. Die Färbeflotten oder Druckpasten können ausser Wasser und den Farbstoffen weitere Zusätze, beispielsweise Netzmittel, Antischaummittel, Egalisiermittel oder die Eigenschaft des Textilmaterials beeinflussende Mittel, wie z.B. Weichmachungsmittel, Zusätze zum Flammfestausrüsten oder schmutz-, wasser- und öl-abweisende Mittel sowie wasserenthärtende Mittel und natürliche oder synthetische Verdicker, wie z.B. Alginate und Celluloseäther, enthalten.

Die Anthrachinonfarbstoffe der Formel (1) eignen sich zum Färben oder Bedrucken von stickstoffhaltigen oder hydroxylgruppenhaltigen Fasermaterialien, insbesondere von natürlichen Polyamidfasermaterialien, wie z.B. Wolle, sowie von synthetischen Polyamidfasermaterialien, wie z.B. Polyamid 6 oder Polyamid 6.6, und sind geeignet zum Färben oder Bedrucken von Woll- und synthetischen Polyamid-Mischgeweben oder -Garnen. Das genannte Textilmaterial kann dabei in den verschiedensten Verarbeitungsformen vorliegen, wie z.B. als Faser, Garn, Gewebe oder Gewirke.

Die erfindungsgemässen Anthrachinonfarbstoffe der Formel (1) ergeben egale Färbungen mit guten Allgemeinechtheiten, insbesondere guter Reib-, Nass-, Nassreib- und Lichtechtheit. Ferner zeichnen sie sich durch gleichmässigen Farbaufbau, ein gutes Aufziehvermögen und gute Kombinierbarkeit mit anderen Farbstoffen aus.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Beispiel 1:

98 Teile der in Form der freien Säure angegebenen Verbindung der Formel

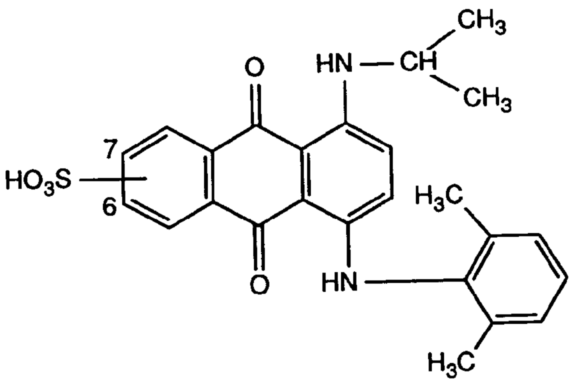

(101)

werden bei einer Temperatur von 20°C in 500 Teilen Schwefelsäure (100%) gelöst und mit 29 Teilen N-Hydroxymethyl-chloracetamid versetzt. Man rührt noch 24 Stunden bei einer Temperatur von 25°C und giesst anschliessend das Reaktionsgemisch auf Eis, wobei der in Form der freien Säure angegebene Farbstoff der Formel

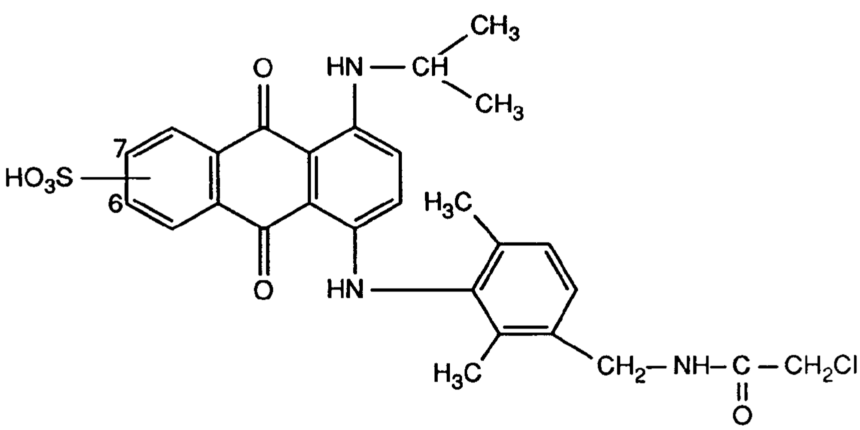

(102)

ausfällt. Der so erhaltene Farbstoff der Formel (102) färbt Wolle und synthetisches Polyamidfasermaterial in brillanten blauen Farbtönen. Die Färbungen weisen gute Lichtechtheiten und Nassechtheiten auf.

Beispiele 2 bis 15:

Verfährt man wie in Beispiel 1 angegeben, verwendet jedoch anstelle von 98 Teilen der Verbindung der Formel (101) eine äquimolare Menge der in Form der freien Säure angegebenen Verbindung der Formel

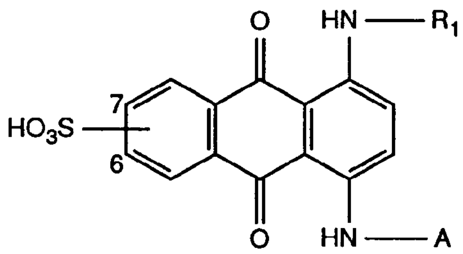

(103)

und anstelle von 29 Teilen N-Hydroxymethyl-chloracetamid eine äquimolare Menge einer Verbindung der Formel

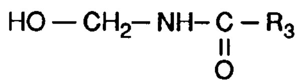

(104),

so erhält man die in der folgenden Tabelle in Spalte 2 in Form der freien Säure angegebenen Farbstoffe, die Wolle und synthetisches Polyamidfasermaterial in den in Spalte 3 angegebenen Farbtönen färben. Die Bedeutungen der Reste A, $R_1$ und $R_3$ der Verbindungen der Formeln (103) und (104) können den in der folgenden Tabelle angegebenen Farbstoffen entnommen werden, welche in allgemeiner Form der Verbindung der Formel

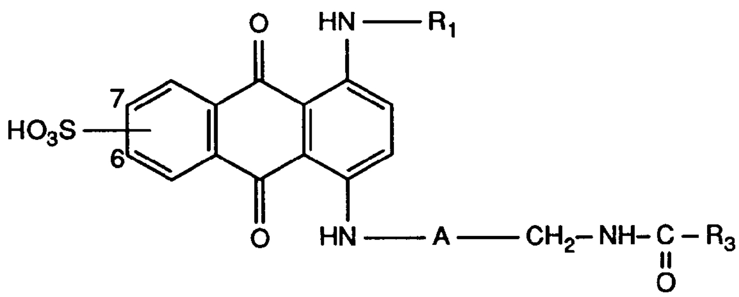

(105)

entsprechen.

Tabelle

| Bsp. | Farbstoff | Farbton |
|---|---|---|
| 2 | 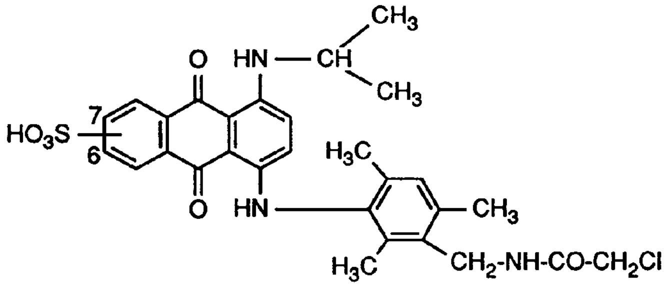 | blau |
| 3 | 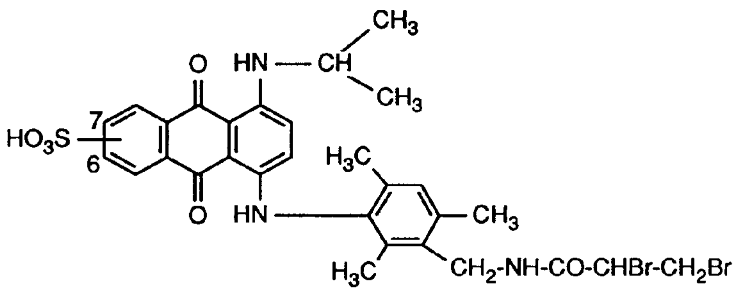 | blau |

4 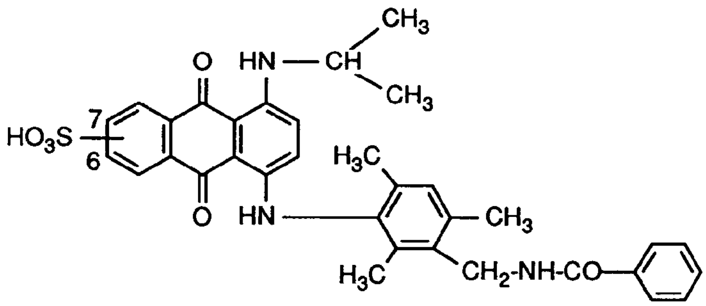 blau

5 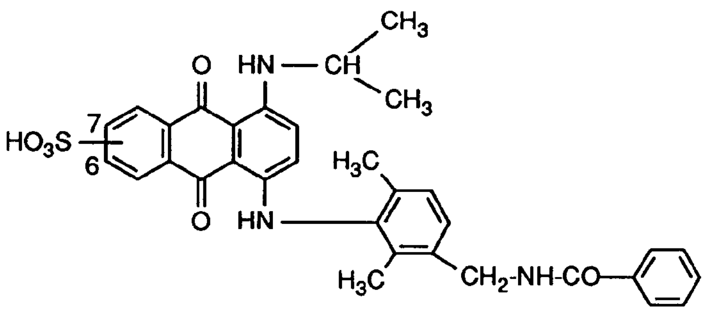 blau

6 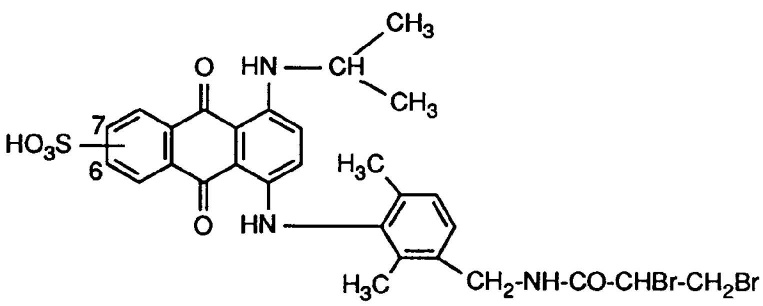 blau

7 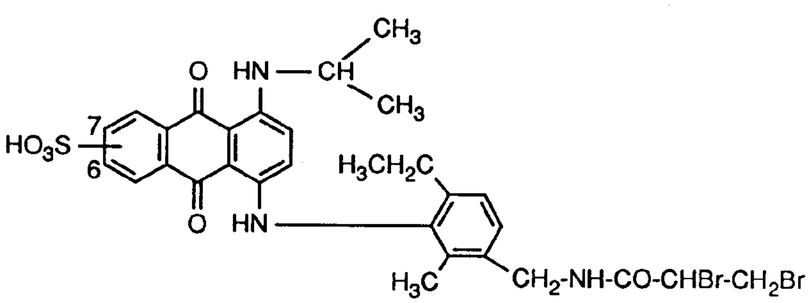 blau

8 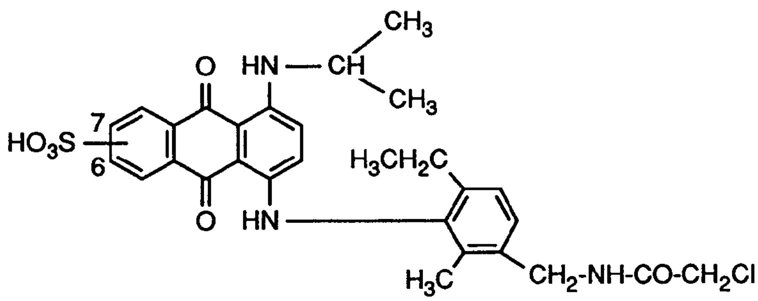 blau

9 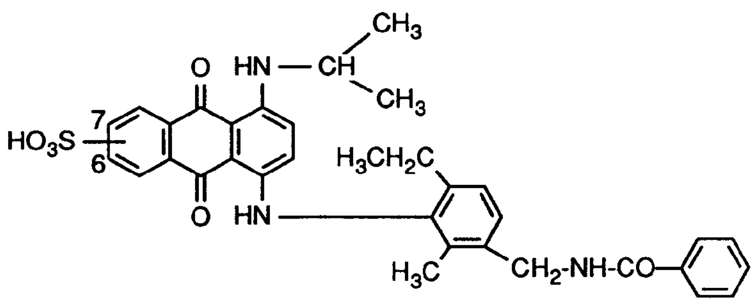 blau

10 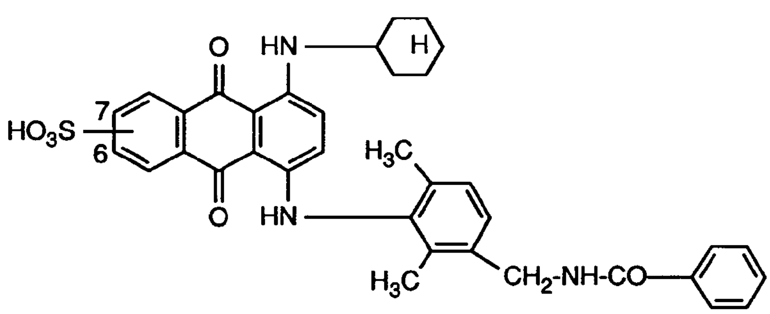 blau

11 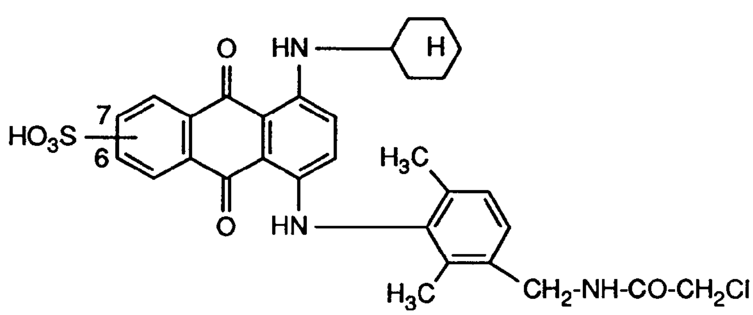 blau

12 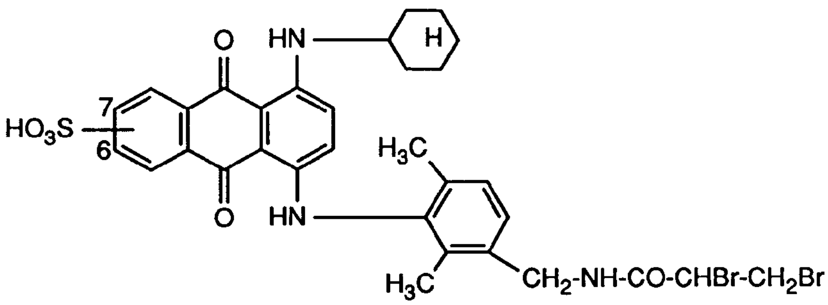 blau

13 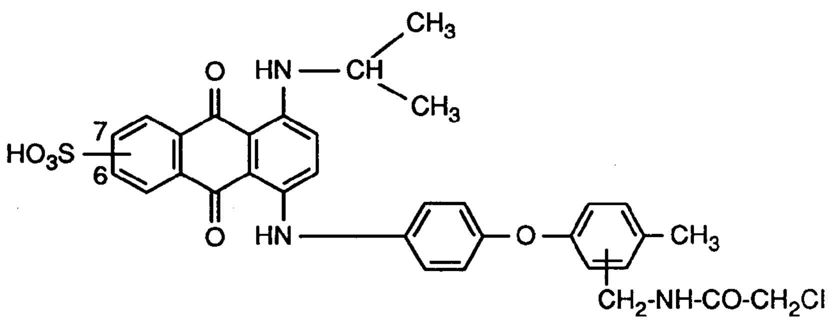 grünblau

14 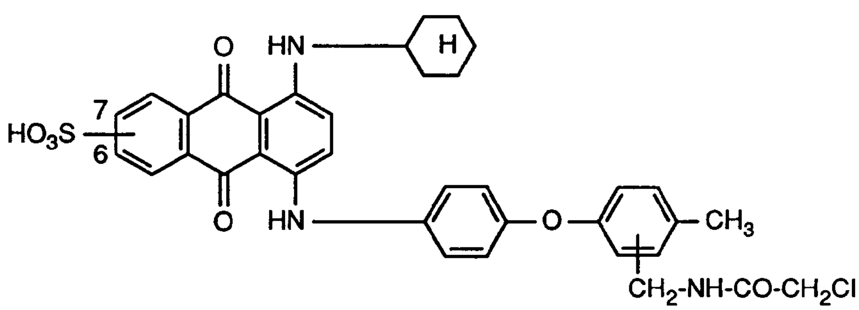 grünblau

15 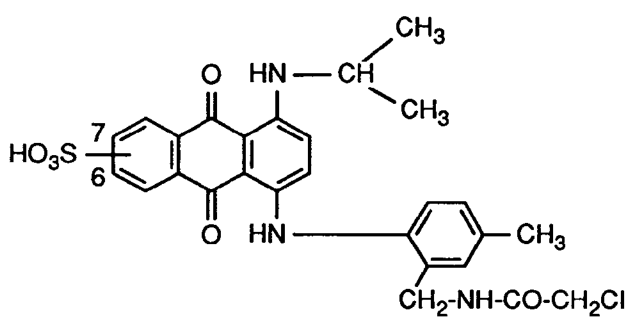 grünblau

Beispiel 16:

Verfährt man wie in Beispiel 1 angegeben, verwendet jedoch anstelle von 29 Teilen N-Hydroxymethyl-chloracetamid 58 Teile N-Hydroxymethyl-chloracetamid, so erhält man den in Form der freien Säure angegebenen Farbstoff der Formel

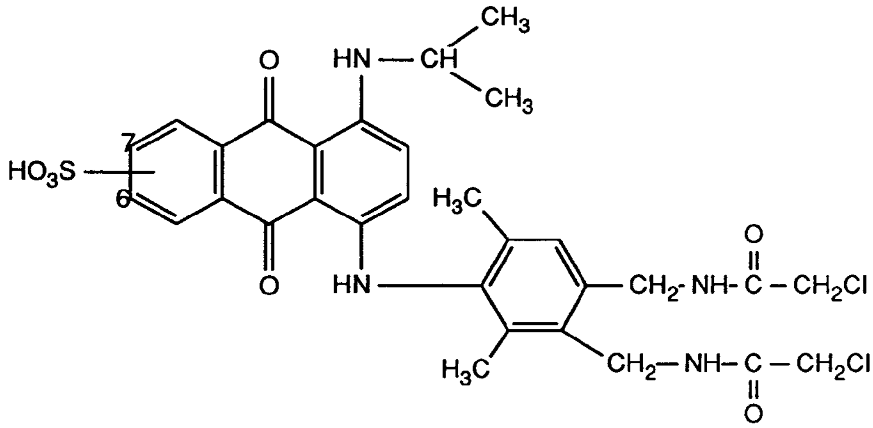

(106).

Der so erhaltene Farbstoff der Formel (106) färbt Wolle und synthetisches Polyamidfasermaterial in blauen Farbtönen. Die Färbungen weisen gute Lichtechtheiten und Nassechtheiten auf.

Die in den obigen Beispielen 1 bis 16 verwendeten Ausgangsverbindungen der Formeln (101), (103) und (105) werden jeweils als Isomerengemisch eingesetzt (die Isomeren unterscheiden sich lediglich hinsichtlich der in 6- oder 7-Position gebundenen Sulfogruppe, das Verhältnis der Isomeren ist 1:1), so dass auch die Farbstoffendprodukte als entsprechende Isomerengemische erhalten werden. Verwendet man in den Beispielen 1 bis 16 anstelle eines Isomerengemisches der Ausgangsprodukte die einzelnen, nicht gemischten Isomeren, so werden auch die entsprechenden Farbstoffe als Einzelfarbstoffe erhalten.

Beispiele 17 und 18:

In analoger Weise zu den Angaben in Beispiel 1 können die Farbstoffe der Formeln

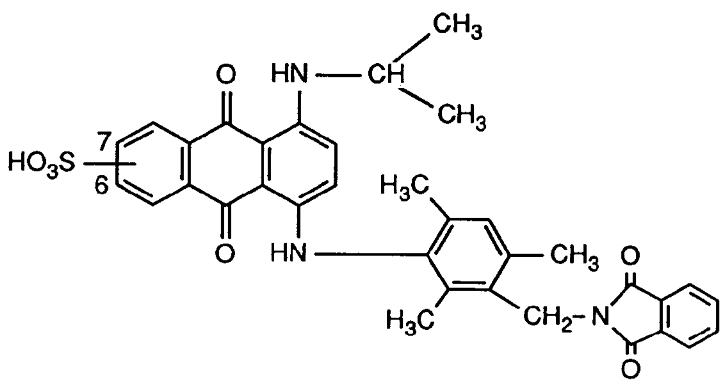

und

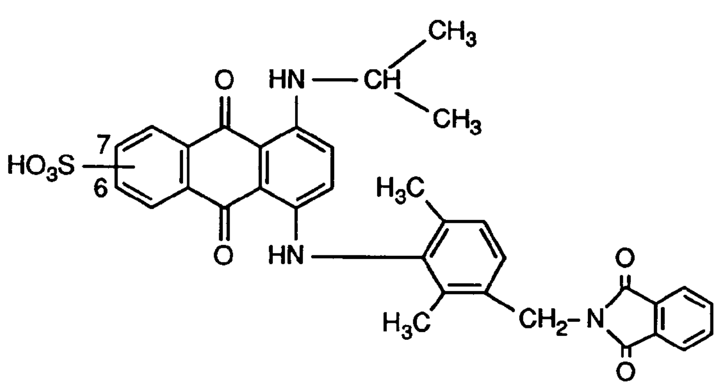

erhalten werden, wobei anstelle von 29 Teilen N-Hydroxymethyl-chloracetamid eine äquimolare Menge einer Verbindung der Formel

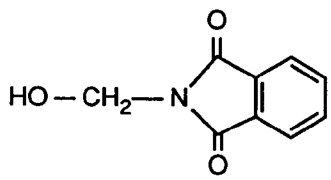

verwendet wird. Die angegebenen Farbstoffe färben Wolle und synthetisches Polyamidfasermaterial in blauen Farbtönen.

Färbevorschrift I

Man färbt 10 Teile Polyamid-6,6-Gewebe in 500 Teilen einer wässrigen Flotte, die 2 g/l Ammonacetat enthält und mit Essigsäure auf pH 5 gestellt wird. Der Anteil des Farbstoffs gemäss Beispiel 1 beträgt 0,7 % bezogen auf das Fasergewicht. Die Färbedauer bei einer Temperatur von 98°C beträgt 30 bis 90 Minuten. Das gefärbte Polyamid-6,6-Gewebe wird anschliessend herausgenommen und wie üblich gewaschen und getrocknet.

Man erhält ein blau gefärbtes Polyamid-6,6-Gewebe, das gute Gesamtechtheiten aufweist.

Färbevorschrift II

Man färbt 10 Teile Polyamid-6,6-Gewebe in 500 Teilen einer wässrigen Flotte, die 1 g/l Mononatriumphosphat enthält und mit Dinatriumphosphat auf pH 6 gestellt wird. Der Anteil des Farbstoffes gemäss Beispiel 1 beträgt 1 %, bezogen auf das Fasergewicht. Die Färbedauer bei einer Temperatur von 98°C beträgt 30 bis 90 Minuten. Das gefärbte Polyamid-6,6-Gewebe wird anschliessend herausgenommen und wie üblich gewaschen und getrocknet.

Man erhält ein blau gefärbtes Polyamid-6,6-Gewebe, das gute Gesamtechtheiten aufweist.

Färbevorschrift III

Man färbt 10 Teile Wollstück in 500 Teilen einer wässrigen Flotte. Bezogen auf das Fasergewicht betragen die Anteile an Farbstoff 0,45 % gemäss Beispiel 1, an Glaubersalz kalz. 5 % und 80%-iger Essigsäure 2 %. Die Färbedauer bei einer Temperatur von 98°C beträgt 30-60 Minuten. Das blau gefärbte, wie üblich gewaschene und getrocknete Wollstück weist gute Gesamtechtheiten auf.

## Patentansprüche

1. Anthrachinonfarbstoffe der Formel

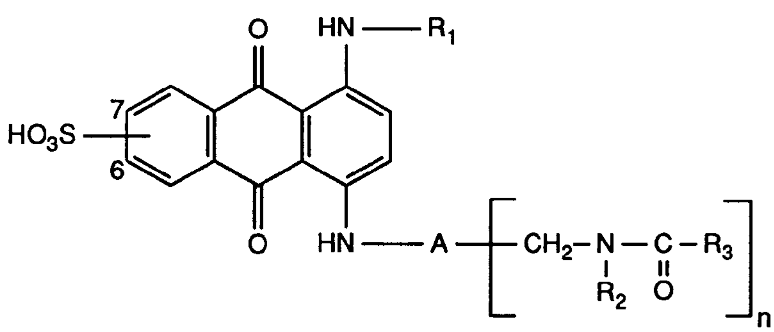

(1),

worin

$R_1$ gegebenenfalls substituiertes $C_5$-$C_8$-Cycloalkyl oder ein Rest der Formel

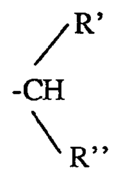

ist, wobei R' und R" unabhängig voneinander einen $C_1$-$C_4$-Alkylrest bedeuten,
$R_2$ Wasserstoff oder $C_1$-$C_4$-Alkyl,
R3 gegebenenfalls durch Halogen substituiertes $C_1$-$C_4$-Alkyl oder $C_2$-$C_4$-Alkenyl, oder gegebenenfalls substituiertes Phenyl ist, oder worin der Rest der Formel

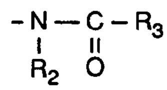

einen gegebenenfalls im Phenylring substituierten Rest der Formel

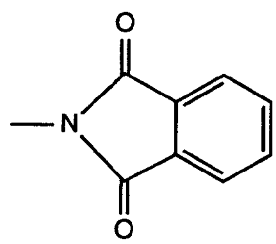

darstellt,
A ein aromatisches Brückenglied und
n die Zahl 1, 2 oder 3 ist,
wobei die Sulfogruppe im Farbstoff der Formel (1) in der bezeichneten 6- oder 7-Position gebunden ist.

2. Anthrachinonfarbstoffe gemäss Anspruch 1, dadurch gekennzeichnet, dass $R_1$ gegebenenfalls durch $C_1$-$C_4$-Alkyl substituiertes Cyclohexyl oder ein Rest der Formel

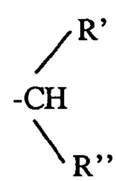

ist, wobei R' und R" unabhängig voneinander einen $C_1$-$C_4$-Alkylrest bedeuten.

3. Anthrachinonfarbstoffe gemäss einem der Ansprüche 1 und 2, dadurch gekennzeichnet, dass $R_1$ Isopropyl oder Cyclohexyl ist.

4. Anthrachinonfarbstoffe gemäss einem der Ansprüche 1 bis 3, dadurch gekennzeichnet, dass $R_2$ Wasserstoff, Methyl oder Aethyl ist.

5. Anthrachinonfarbstoffe gemäss einem der Ansprüche 1 bis 4, dadurch gekennzeichnet, dass $R_2$ Wasserstoff ist.

6. Anthrachinonfarbstoffe gemäss einem der Ansprüche 1 bis 5, dadurch gekennzeichnet, dass $R_3$ gegebenenfalls durch $C_1$-$C_4$-Alkyl, $C_1$-$C_4$-Alkoxy, $C_2$-$C_4$-Alkanoylamino oder Halogen substituiertes Phenyl oder gegebenenfalls durch Chlor oder Brom substituiertes Methyl, Aethyl oder Vinyl ist.

7. Anthrachinonfarbstoffe gemäss einem der Ansprüche 1 bis 6, dadurch gekennzeichnet, dass $R_3$ Phenyl

oder ein Rest der Formel $-CH_2Cl$, $-CH=CH_2$, $-CHBr-CH_2Br$ oder

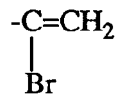

ist.

**8.** Anthrachinonfarbstoffe gemäss einem der Ansprüche 1 bis 7, dadurch gekennzeichnet, dass A gegebenenfalls durch $C_1$-$C_4$-Alkyl, $C_1$-$C_4$-Alkoxy, $C_2$-$C_4$-Alkanoylamino oder Halogen substituiertes Phenylen oder Phenylenoxyphenylen ist.

**9.** Anthrachinonfarbstoffe gemäss einem der Ansprüche 1 bis 8, dadurch gekennzeichnet, dass n die Zahl 1 oder 2, insbesondere die Zahl 1, ist.

**10.** Anthrachinonfarbstoffe gemäss Anspruch 1, dadurch gekennzeichnet, dass $R_1$ gegebenenfalls durch $C_1$-$C_4$-Alkyl substituiertes Cyclohexyl oder ein Rest der Formel

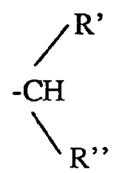

ist, wobei R' und R" unabhängig voneinander einen $C_1$-$C_4$-Alkylrest bedeuten, $R_2$ Wasserstoff, Methyl oder Aethyl, $R_3$ gegebenenfalls durch $C_1$-$C_4$-Alkyl, $C_1$-$C_4$-Alkoxy, $C_2$-$C_4$-Alkanoylamino oder Halogen substituiertes Phenyl oder gegebenenfalls durch Chlor oder Brom substituiertes Methyl, Aethyl oder Vinyl, A gegebenenfalls durch $C_1$-$C_4$-Alkyl, $C_1$-$C_4$-Alkoxy, $C_2$-$C_4$-Alkanoylamino oder Halogen substituiertes Phenylen oder Phenylenoxyphenylen und n die Zahl 1 oder 2 ist.

**11.** Anthrachinonfarbstoffe gemäss Anspruch 10, dadurch gekennzeichnet, dass $R_1$ Isopropyl oder Cyclohexyl, $R_2$ Wasserstoff, $R_3$ Phenyl oder ein Rest der Formel $-CH_2Cl$, $-CH=CH_2$, $-CHBr-CH_2Br$ oder

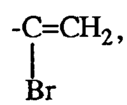

A gegebenenfalls durch $C_1$-$C_4$-Alkyl substituiertes Phenylen oder Phenylenoxyphenylen und n die Zahl 1 oder 2 ist.

**12.** Mischungen von Anthrachinonfarbstoffen gemäss einem der Ansprüche 1 bis 11, dadurch gekennzeichnet, dass sie einen Farbstoff der Formel

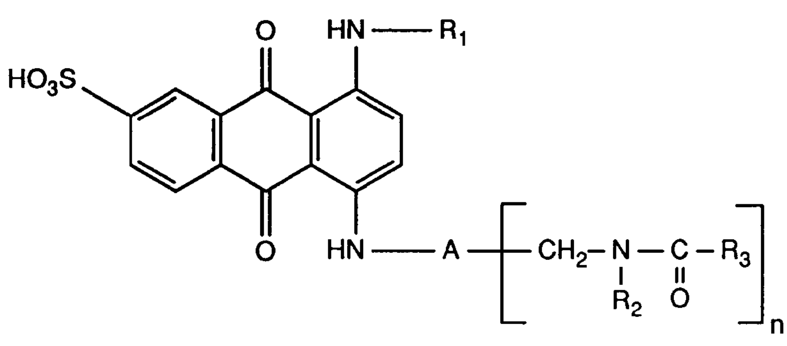

(1a)

zusammen mit einen Farbstoff der Formel

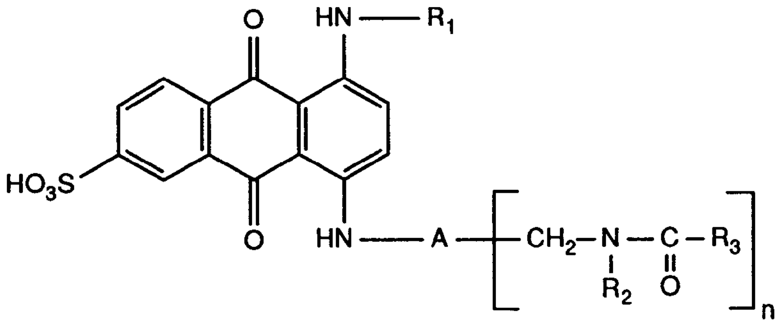

(1b)

enthalten, wobei A, $R_1$, $R_2$, $R_3$ und n die in Anspruch 1 angegebenen Bedeutungen haben.

**13.** Verfahren zur Herstellung von Anthrachinonfarbstoffen gemäss Anspruch 1, dadurch gekennzeichnet, dass man eine Verbindung der Formel

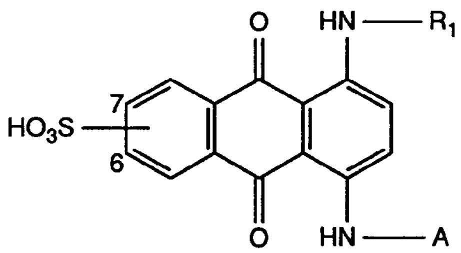

(2),

worin $R_1$ und A die in Anspruch 1 angegebenen Bedeutungen haben, mit einer Verbindung der Formel

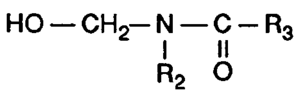

(3),

worin $R_2$ und $R_3$ die in Anspruch 1 angegebenen Bedeutungen haben, umsetzt.

**14.** Verwendung der Anthrachinonfarbstoffe gemäss den Ansprüchen 1 bis 11 bzw. der Anthrachinonfarbstoffmischungen gemäss Anspruch 12 zum Färben oder Bedrücken von stickstoffhaltigen oder hydroxygruppenhaltigen Fasermaterialien.

**15.** Verwendung gemäss Anspruch 14 zum Färben oder Bedrücken von natürlichen oder synthetischen Polyamidfasermaterialien.

Europäisches Patentamt

# EUROPÄISCHER RECHERCHENBERICHT

Nummer der Anmeldung
EP 93 81 0812

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
| A | EP-A-0 181 293 (CIBA-GEIGY AG)<br>* Seite 14, Formel 10 *<br>* Seite 23 *<br>* Seite 14, unterer Abschnitt *<br>--- | 1-12,14, 15 | C09B62/467<br>C09B67/22 |
| A | GB-A-1 048 316 (J. R. GEIGY AG)<br>* Beispiele *<br>--- | 1-11,14, 15 | |
| A | GB-A-903 590 (J. R. GEIGY AG)<br>* Beispiele 14-16 *<br>--- | 1-11,14, 15 | |
| A | FR-A-1 470 510 (J. R. GEIGY AG)<br>* Ansprüche; Beispiele *<br>----- | 1-11,14, 15 | |
| | | | RECHERCHIERTE SACHGEBIETE (Int.Cl.5) |
| | | | C09B |

Der vorliegende Recherchenbericht wurde für alle Patentansprüche erstellt

| Recherchenort | Abschlußdatum der Recherche | Prüfer |
|---|---|---|
| DEN HAAG | 23. März 1994 | Ketterer, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)